# EUROPEAN PATENT APPLICATION

(11) **EP 4 819 135 A1**
(43) Date of publication of application: **07.10.2026**
(21) Application number: 24897444.6
(22) Date of filing: 21.11.2024
(51) Int. Cl.: G11B 5/84, G11B 5/02, G11B 5/64

(54) **INFORMATION PROCESSING DEVICE, ANALYSIS METHOD, AND ANALYSIS PROGRAM**

(30) Priority: 28.11.2023 JP 2023200999
(71) Applicant: Resonac Corporation, Tokyo 105-7325 (JP)
(72) Inventor: OCHIAI, Kohei, Tokyo 105-7325 (JP); TSUYAMA, Tomoyuki, Tokyo 105-7325 (JP); YAMANAKA, Kensuke, Ichihara-shi, Chiba 290-0067 (JP); KUDO, Fumito, Ichihara-shi, Chiba 290-0067 (JP); ZHANG, Lei, Ichihara-shi, Chiba 290-0067 (JP); WATANABE, Jin, Tokyo 105-7325 (JP)
(74) Representative: Strehl & Partner mbB
(86) International application number: PCT/JP2024/041337
(87) International publication number: WO 2025/115758

(57) **Abstract**

To improve accuracy in calculating a Curie temperature for each particle size. An information processing apparatus includes a setting part configured to predefine a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind; a calculator configured to calculate a Curie temperature by calculating magnetization at each temperature using the predefined magnetic calculation model; and an outputter configured to output the calculated Curie temperature by associating the calculated Curie temperature with a particle size of the magnetic nanoparticle included in the particle structure information.

## Description

### TECHNICAL FIELD

The present disclosure relates to an information processing apparatus, an analysis method, and an analysis program.

### BACKGROUND ART

In a recording medium for recording data by heat-assisted magnetic recording (HAMR), a recording layer is heated to a Curie temperature of magnetic nanoparticles forming the recording layer during recording.

In general, a Curie temperature changes according to a particle size of the magnetic nanoparticles. Therefore, if variation in particle sizes of the magnetic nanoparticles that form the recording layer is large, variation in Curie temperatures also increases, and the recording quality deteriorates.

Therefore, it is important to measure in advance variation in particle sizes of the magnetic nanoparticles that form the recording layer and to manage the range of Curie temperatures of the magnetic nanoparticles that form the recording layer, in order to quantitatively indicate the recording quality.

### RELATED ART DOCUMENTS

### PATENT DOCUMENT

Non-Patent Document 1: Nguyen Thanh Binh, et al. "Influence of Finite-size Effects on the Curie Temperature of L10-FePt", Physical Review B 106.5 (2022):054421

### SUMMARY OF THE INVENTION

### PROBLEMS TO BE SOLVED BY THE INVENTION

A Curie temperature corresponding to each particle size of the magnetic nanoparticles can be calculated using a magnetic simulation software; however, such conventional simulation software has not provided sufficient computation accuracy to precisely control the range of Curie temperatures.

The present disclosure improves accuracy in calculation of a Curie temperature for each particle size.

### MEANS FOR SOLVING THE PROBLEMS

An information processing apparatus according to a first aspect of the present disclosure includes:
a setting part configured to predefine a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind;
a calculator configured to calculate a Curie temperature by calculating magnetization at each temperature using the predefined magnetic calculation model; and
an outputter configured to output the calculated Curie temperature by associating the calculated Curie temperature with a particle size of the magnetic nanoparticle included in the particle structure information.

A second aspect of the present disclosure is the information processing apparatus according to the first aspect, wherein the particle structure information further includes atomic arrangement information indicating an arrangement of atoms included in the magnetic nanoparticle.

A third aspect of the present disclosure is the information processing apparatus according to the second aspect, wherein the setting part is further configured to acquire, as the first exchange interaction, an exchange interaction acting between directly adjacent atoms on a same plane among atoms arranged based on the atomic arrangement information; and acquire, as the second exchange interaction, an exchange interaction acting between atoms of a same kind on a plane orthogonal to the same plane among the atoms arranged based on the atomic arrangement information.

A fourth aspect of the present disclosure is the information processing apparatus according to the first aspect, wherein in a case where the setting part sequentially predefines each of a plurality of magnetic calculation models which differ in particle size of the magnetic nanoparticle and the setting part sequentially sets a Curie temperature, the outputter calculates a range of Curie temperatures corresponding to a predetermined range of particle sizes, each of the plurality of magnetic calculation models being the magnetic calculation model.

A fifth aspect of the present disclosure is the information processing apparatus according to the fourth aspect, wherein the outputter outputs a graph showing a relationship between a plurality of particle sizes of the magnetic nanoparticle and a plurality of calculated Curie temperatures.

A sixth aspect of the present disclosure is the information processing apparatus according to the fifth aspect, wherein the outputter superimposes the range of particle sizes and the range of Curie temperatures on the graph and outputs the graph.

A seventh aspect of the present disclosure is the information processing apparatus according to the fourth aspect, wherein the range of particle sizes is specified based on a median value of the plurality of particle sizes and a variance value of the plurality of particle sizes.

An eighth aspect of the present disclosure is the information processing apparatus according to any one of the first through seventh aspects, wherein the magnetic nanoparticle is an FePt magnetic nanoparticle.

A ninth aspect of the present disclosure is the information processing apparatus according to the eighth aspect, wherein the first exchange interaction is an exchange interaction acting between Fe atoms, and the second exchange interaction is an exchange interaction acting between Fe atoms with a Pt atom being arranged between the Fe atoms.

A tenth aspect of the present disclosure is the information processing apparatus according to any one of the first through ninth aspects, wherein the first exchange interaction and the second exchange interaction are calculated by a first-principles calculation.

An analysis method according to an eleventh aspect of the present disclosure is an analysis method in which a computer is caused to perform:
predefining a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind;
calculating a Curie temperature by calculating magnetization at each temperature using the predefined magnetic calculation model; and
outputting the calculated Curie temperature by associating the calculated Curie temperature with a particle size of the magnetic nanoparticle included in the particle structure information.

An analysis program according to a twelfth aspect of the present disclosure causes a computer to perform:
predefining a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind;
calculating a Curie temperature by calculating magnetization at each temperature using the predefined magnetic calculation model; and
outputting the calculated Curie temperature by associating the calculated Curie temperature with a particle size of the magnetic nanoparticle included in the particle structure information.

### EFFECTS OF THE INVENTION

According to the present disclosure, accuracy in calculation of a Curie temperature for each particle size can be improved.

### BRIEF DESCRIPTION OF THE DRAWINGS

[FIG. 1] FIG. 1 is a first diagram illustrating an example of a system configuration of an analysis system.
[FIG. 2A] FIG. 2A is a diagram illustrating a relationship between temperature and magnetization.
[FIG. 2B] FIG. 2B is a graph illustrating an example of a method of calculating a Curie temperature.
[FIG. 3] FIG. 3 is a diagram explaining an overview of a magnetic calculation model.
[FIG. 4] FIG. 4 is a diagram illustrating an example of a hardware configuration of an information processing apparatus.
[FIG. 5] FIG. 5 is a diagram illustrating an example of a system configuration of the information processing apparatus.
[FIG. 6] FIG. 6 is a first flowchart showing a flow of Curie temperature range calculation processing.
[FIG. 7] FIG. 7 is a diagram illustrating an example of stored data.
[FIG. 8] FIG. 8 is a graph illustrating a relationship between a particle size and a Curie temperature, with a range of particle sizes and a range of Curie temperatures being superimposed on the graph.
[FIG. 9A] FIG. 9A is a first diagram illustrating a difference in calculation accuracy resulting from variations in magnetic calculation models.
[FIG. 9B] FIG. 9B is a second diagram illustrating a difference in calculation accuracy resulting from variations in magnetic calculation models.
[FIG. 10] FIG. 10 is a second diagram illustrating an example of a system configuration of an analysis system.
[FIG. 11] FIG. 11 is a second flowchart showing a flow of Curie temperature range calculation processing.

### DESCRIPTION OF EMBODIMENTS

Hereinafter, each embodiment will be described with reference to the accompanying drawings. In this specification and the drawings, components having substantially the same functional configuration are denoted by the same reference numerals, and redundant descriptions thereof will be omitted.

### (First Embodiment)

### <System Configuration of Analysis System>

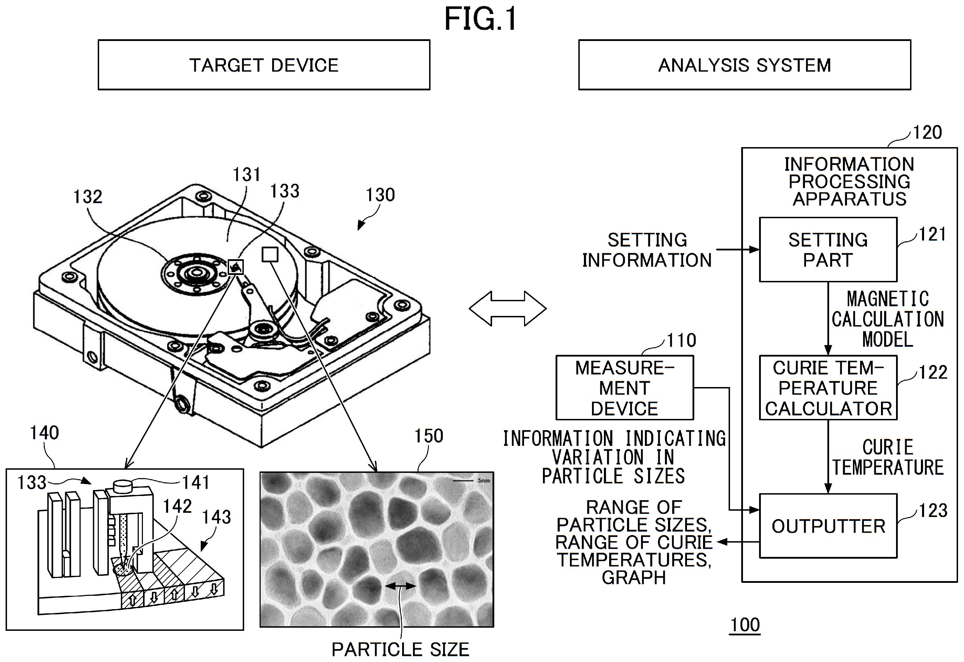

First, a system configuration of an analysis system including an information processing apparatus according to the first embodiment will be described. FIG. 1 is a first diagram illustrating an example of a system configuration of an analysis system. As illustrated in FIG. 1, a magnetic storage device 130 is a target device provided with a target to be analyzed by an analysis system 100. The magnetic storage device 130 includes a heat-assisted magnetic recording medium 131, a magnetic recording medium driver 132 for rotating the heat-assisted magnetic recording medium 131, and a recording head 133.

The diagram 140 illustrates a positional relationship between various parts around the recording head 133. As illustrated in the diagram 140, the recording head 133 has a laser element 141 and irradiates a recording layer 143 with near-field light 142. As a result of the irradiation, the recording layer 143 is heated to a Curie temperature, so that data can be recorded at a high recording density in the heat-assisted magnetic recording medium 131. In the first embodiment, the recording layer 143 is made of FePt magnetic nanoparticles.

The diagram 150 is an enlarged view of the surface of the recording layer 143, and each particle separated by a white line indicates a FePt magnetic nanoparticle. The double-headed arrow in the diagram 150 indicates a particle size of one of the FePt magnetic nanoparticles.

The analysis system 100 calculates the range of Curie temperatures of the FePt magnetic nanoparticles that form the recording layer 143 of the heat-assisted magnetic recording medium 131 used for the magnetic storage device 130. Thus, the recording quality of the recording layer 143 can be quantitatively indicated.

Specifically, a measurement device 110 of the analysis system 100 samples and measures particle sizes of the FePt magnetic nanoparticles that form the recording layer 143 of the heat-assisted magnetic recording medium 131 used for the magnetic storage device 130. The measurement device 110 of the analysis system 100 calculates a median value and a variance value of the particle sizes as information indicating variation in the sampled particle sizes, and informs the information processing apparatus 120 of the calculated median value and variance value.

An analysis program is installed in the information processing apparatus 120 of the analysis system 100, and when the analysis program is executed, the information processing apparatus 120 functions as a setting part 121, a Curie temperature calculator 122, and an outputter 123.

The setting part 121 acquires setting information necessary for predefining a magnetic calculation model for a single FePt magnetic nanoparticle, and predefines a magnetic calculation model.

The Curie temperature calculator 122 performs magnetic simulations using the predefined magnetic calculation model, and calculates a Curie temperature by calculating average magnetization of an entire magnetic calculation model at each temperature.

The outputter 123 outputs the calculated Curie temperature in association with the particle size of the magnetic calculation model included in the setting information.

Specifically, in the case where the Curie temperature calculator 122 sequentially calculates a Curie temperature for each of the plurality of magnetic calculation models which differ in particle size, the outputter 123 outputs a graph representing the relationship between the plurality of particle sizes and the plurality of Curie temperatures.

In the case where the measurement device 110 informs a user of information indicating variation in particle sizes, the outputter 123 calculates the range of particle sizes based on the information indicating variation in particle sizes. Subsequently, the outputter 123 calculates the range of Curie temperatures corresponding to the range of particle sizes based on the graph. Thus, the outputter 123 can output the graph, with the range of particle sizes and the range of Curie temperatures being superimposed on the graph.

### <Relationship between Temperature and Magnetization>

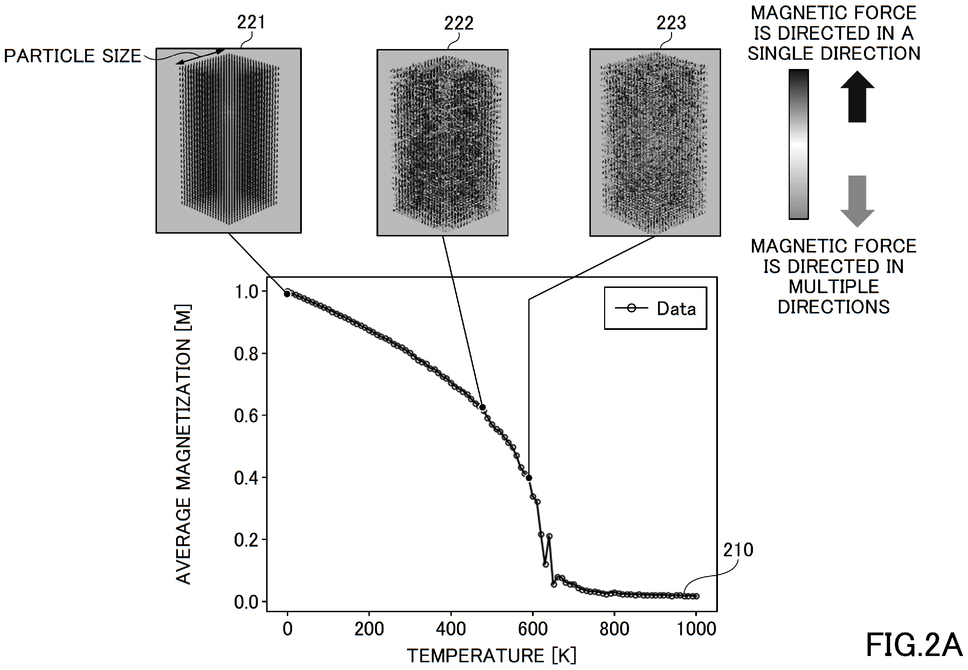

Next, the relationship between magnetization calculated using the magnetic calculation model and temperature will be described. FIG. 2A is a diagram illustrating a relationship between temperature and magnetization. In FIG. 2A, the horizontal axis represents temperature [K], and the vertical axis represents average magnetization [M]. The graph 210 shows average magnetization at each temperature of the magnetic calculation model.

The image 221 illustrates magnetism of each atom of the magnetic calculation model at a temperature of 0 [K], the image 222 illustrates magnetism of each atom of the magnetic calculation model at a temperature of 500 [K], and the image 223 illustrates magnetism of each atom of the magnetic calculation model at a temperature of 620 [K]. Each sphere arranged in the images 221 through 223 represents one atom, and a dark-colored atom indicates that the magnetic force is directed in one predetermined direction. A light-colored atom indicates that the magnetic force is directed in multiple directions.

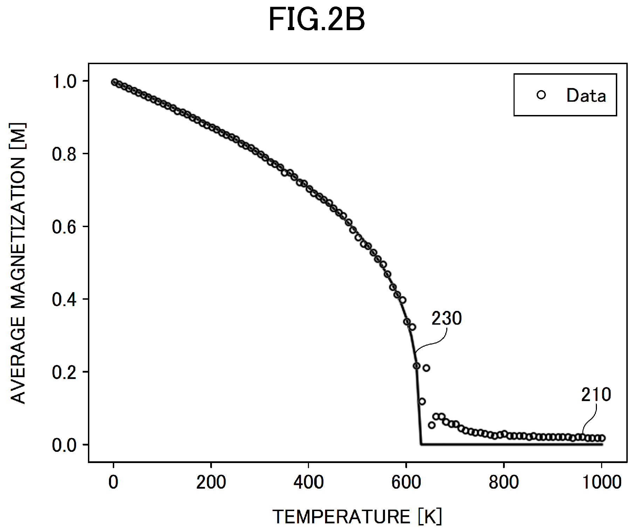

FIG. 2B is a graph illustrating an example of a method of calculating a Curie temperature. In FIG. 2B, the graph 230 shows a result of fitting the graph 210 with a mathematical expression, which is described later. The Curie temperature calculator 122 calculates a Curie temperature by fitting a relationship between a temperature and average magnetization.

### <Overview of Magnetic Calculation Model>

Next, an overview of a magnetic calculation model will be described. In the description hereinafter, an overview of a magnetic calculation model with which it is difficult to achieve sufficient calculation accuracy by the Curie temperature calculator 122 will be described first as a comparative example. Subsequently, an overview of a magnetic calculation model with which it is possible to achieve sufficient calculation accuracy by the Curie temperature calculator 122 will be described.

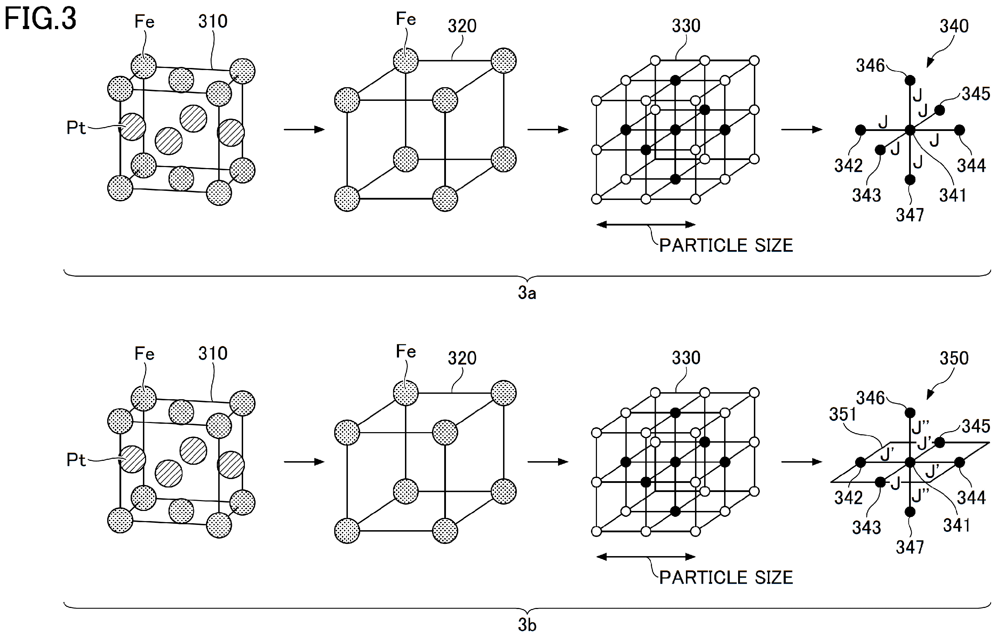

FIG. 3 is a diagram explaining an overview of a magnetic calculation model. In FIG. 3, the "3a" part shows the flow of processing, up to the stage of predefining a magnetic calculation model in the comparative example.

In the "3a" part of FIG. 3, a structure 310 illustrates an arrangement of Fe atoms and Pt atoms in an FePt magnetic nanoparticle. In the "3a" part of FIG. 3, a structure 320 illustrates a simplified arrangement in an FePt magnetic nanoparticle in order to reduce the calculation cost in predefining a magnetic calculation model for a single FePt magnetic nanoparticle. Specifically, only Fe atoms are arranged on a simple cubic lattice in the example illustrated in the "3a" part of FIG. 3.

In the "3a" part of FIG. 3, a structure illustrates a magnetic calculation model for a single FePt magnetic nanoparticle having a predetermined particle size, and only Fe atoms are arranged on a simple cubic lattice. For the sake of space, the particle size of the magnetic calculation model is set to 3×3×3 particles in the "3a" part of FIG. 3.

In the "3a" part of FIG. 3, the diagram 340 illustrates a state in which J is set as an exchange interaction acting between directly adjacent Fe atoms in the predefined magnetic calculation model. Regarding conventional software for magnetic simulation, for example, a software manufacturer published the paper cited below. The paper describes that only one kind of value is set as the exchange interaction acting between atoms in a magnetic calculation model for an FePt magnetic nanoparticle. Therefore, according to this paper, in the case of the magnetic calculation model in the comparative example, only one type of value is set as an exchange interaction acting between directly adjacent atoms, regardless of the direction in which these atoms are located, as illustrated by the diagram 340.

### (Reference Document)

Nguyen Thanh Binh, Sergiu Ruta, Ondrej Hovorka, Richard. F. L. Evans, Roy. W. Chantrell, "Influence of Finite-size Effects on the Curie Temperature of L10-FePt," Phys. Rev., B106, 054421, August 17, 2022. <https://doi.org/10.48550/arXiv.2207.11831>
For the sake of space, the example of the diagram 340
- depicts, of the Fe atoms included in the magnetic calculation model, only the Fe atom indicated by "341" and the Fe atoms indicated by "342" through "347" that are directly adjacent to the Fe atom indicated by "341"; and
- illustrates only the exchange interaction acting between the Fe atom indicated by "341" and the Fe atoms indicated by "342" through "347" that are directly adjacent to the Fe atom indicated by "341".

However, for the atoms other than the Fe atom indicated by "341", it is assumed that J is set as the exchange interaction acting with directly adjacent Fe atoms, in the same manner as the example of the diagram 340.

The "3b" part of FIG. 3 shows, on the other hand, a flow of predefining a magnetic calculation model capable of achieving sufficient calculation accuracy with the Curie temperature calculator 122.

The description regarding the structures 310 through 330 in the "3b" part of FIG. 3 is omitted as these structures are the same as the structures 310 through 330 in the "3a" part of FIG. 3.

In the case of the setting part 121 of the information processing apparatus 120 according to the first embodiment, at least two different values can be set in accordance with the direction in which directly adjacent atoms are located, as an exchange interaction acting between atoms.

In the "3b" part of FIG. 3, the diagram 350 indicates a state in which, in the magnetic calculation model:
- J' is set as a first exchange interaction acting between the Fe atom indicated by "341" and any one of the Fe atoms indicated by "342" through "345" directly adjacent to the Fe atom indicated by "341" in the same plane 351; and
- J" is set as a second exchange interaction acting between the Fe atom indicated by "341" and the Fe atoms 346 or 347 directly adjacent to the Fe atom indicated by "341" in the direction orthogonal to the plane 351. Herein, it is assumed that the relationship is J' > J". The relationship J' > J" is defined because, although only Fe atoms are arranged for simplicity in the predefined magnetic calculation model, a Pt atom is actually arranged between the Fe atom indicated by "341" and the Fe atom indicated by "346". In other words, the exchange interaction acting between the Fe atom indicated by "341" and the Fe atom indicated by "346" or "347" with a Pt atom, which is of a kind differing from Fe, being arranged between those Fe atoms is smaller than the exchange interaction between the Fe atom indicated by "341" and any one of the Fe atoms indicated by "342" through "345" with no Pt atom being arranged between those Fe atoms.

As described above, when predefining the magnetic calculation model, the information processing apparatus 120 according to the first embodiment is configured to:
- reduce the calculation cost by arranging only Fe atoms on a simple cubic lattice; and
- achieve the same advantageous effect as in the case where Pt atoms are arranged between Fe atoms, by differentiating an exchange interaction acting between atoms of the same kind (Fe atoms) between the case where atoms of the same kind are arranged in the same plane 351 and the case where atoms of the same kind are arranged in a direction orthogonal to the plane 351. Thus, with the information processing apparatus 120 according to the first embodiment, it is possible to improve accuracy in the calculation of a Curie temperature.

### <Hardware Configuration of Information Processing Apparatus>

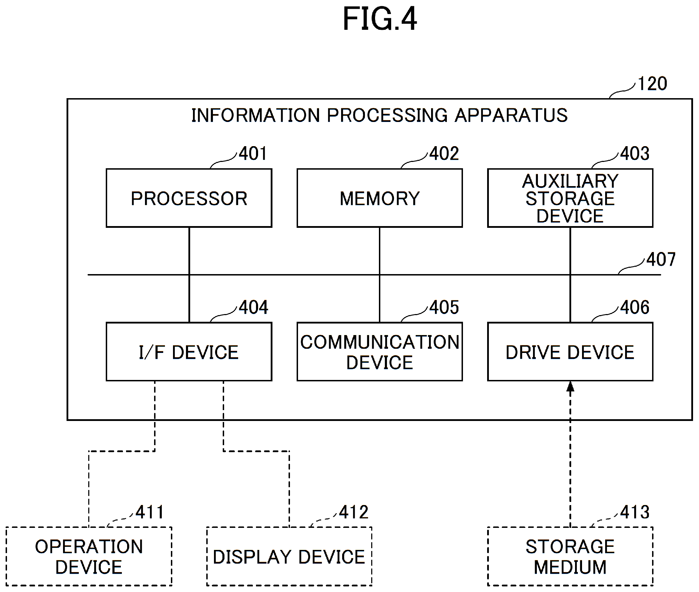

Next, a hardware configuration of the information processing apparatus 120 will be described. FIG. 4 is a diagram illustrating an example of a hardware configuration of the information processing apparatus 120. As illustrated in FIG. 4, the information processing apparatus 120 includes a processor 401, a memory 402, an auxiliary storage device 403, an I/F (interface) device 404, a communication device 405, and a drive device 406. The hardware components of the information processing apparatus 120 are interconnected via a bus 407.

The processor 401 includes various computing devices, such as a CPU (central processing unit) and a GPU (graphics processing unit). The processor 401 reads various programs (e.g., an analysis program) and loads them into the memory 402 to execute various programs.

The memory 402 includes a main storage device, such as a ROM (read only memory) and a RAM (random access memory). The processor 401 and the memory 402 constitute a so-called computer, and the computer implements various functions by the processor 401 executing various programs loaded into the memory 402.

The auxiliary storage device 403 stores various programs and various data used when the various programs are executed by the processor 401. For example, the data storage 535 described later is implemented in the auxiliary storage device 403.

The I/F device 404 is a connection device for connecting an operation device 411 and a display device 412, which are examples of user interface devices. The communication device 405 is a communication device for communicating with an external device via a network (not illustrated).

The drive device 406 is a device for setting a recording medium 413. The recording medium 413 herein includes a medium for recording information optically, electrically, or magnetically, such as a CD-ROM, a flexible disk, a magneto-optical disk, and the like. The recording medium 413 may include a semiconductor memory for recording information electrically, such as a ROM or a flash memory.

The various programs installed in the auxiliary storage device 403 are installed, for example, when the distributed recording medium 413 is set in the drive device 406 and the various programs recorded in the recording medium 413 are read by the drive device 406. Alternatively, the various programs installed in the auxiliary storage device 403 may be installed when they are downloaded from the network via the communication device 405.

### <Functional Configuration of Information Processing Apparatus>

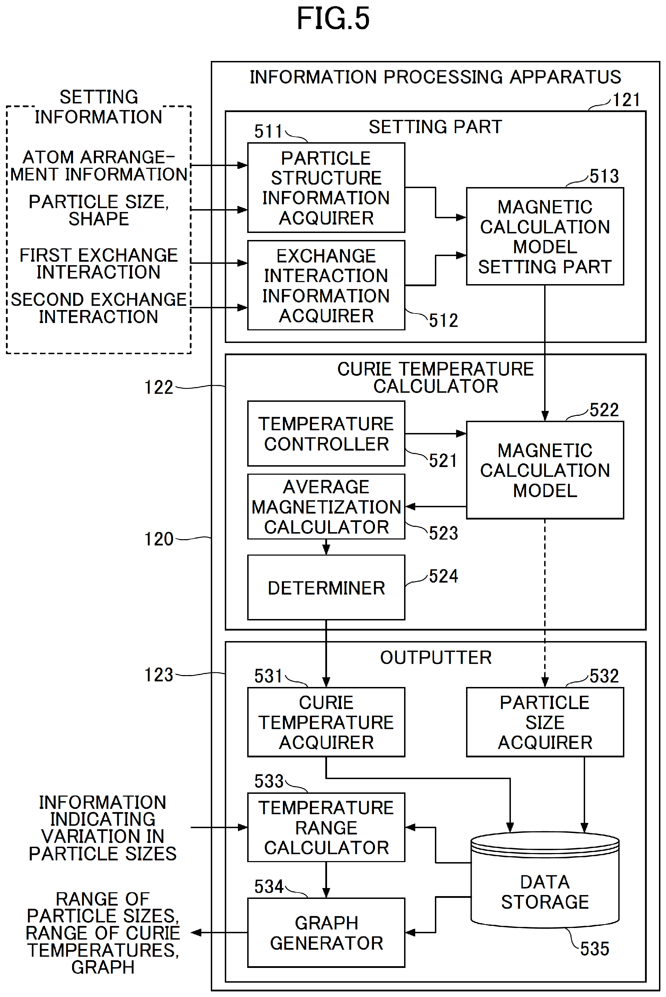

Next, the functional configuration of the information processing apparatus 120 will be described in detail. FIG. 5 is a diagram illustrating an example of a system configuration of the information processing apparatus.

As illustrated in FIG. 5, the setting part 121 further includes a particle structure information acquirer 511, an exchange interaction information acquirer 512, and a magnetic calculation model setting part 513.

The particle structure information acquirer 511 and the exchange interaction information acquirer 512 acquire setting information necessary for predefining a magnetic calculation model for a single FePt magnetic nanoparticle to be subjected to magnetic simulations. The setting information acquired by the information processing apparatus 120 at least includes atomic arrangement information, particle size, particle shape, first exchange interaction, and second exchange interaction.

The particle structure information acquirer 511 acquires, among the setting information, atomic arrangement information, particle size, and particle shape of an FePt magnetic nanoparticle. The information processing apparatus 120 according to the first embodiment performs magnetic simulations processing by setting the simplified magnetic calculation model shown in the "3b" part of FIG. 3. Therefore, the particle structure information acquirer 511 acquires, for example:
- atomic arrangement information (arrangement of only N² Fe atoms with an interatomic distance L on a simple cubic lattice); and
- particle size and particle shape (cubic shape in which one side has a length of (N-1)×L).

The exchange interaction information acquirer 512 acquires a first exchange interaction and a second exchange interaction of the setting information. As described with reference to the "3b" part of FIG. 3, in the case of the information processing apparatus 120 according to the first embodiment, the exchange interaction information acquirer 512 acquires the first exchange interaction J' and the second exchange interaction J" (J'> J").

The magnetic calculation model setting part 513 predefines a magnetic calculation model based on the setting information acquired by the particle structure information acquirer 511 and the exchange interaction information acquirer 512, and sets the model in the Curie temperature calculator 122.

As illustrated in FIG. 5, the Curie temperature calculator 122 further includes a temperature controller 521, a magnetic calculation model 522, an average magnetization calculator 523, and a determiner 524.

The temperature controller 521 controls a temperature value added to the magnetic calculation model 522 during the magnetic simulation process.

The magnetic calculation model 522 is a magnetic calculation model that is set by the magnetic calculation model setting part 513, and calculates the magnetism (direction of the magnetic moment of each atom) of each atom at each temperature controlled by the temperature controller 521.

The average magnetization calculator 523 calculates average magnetization of the entire magnetic calculation model at each temperature from magnetization of each atom calculated by performing magnetic simulation processing using the magnetic calculation model 522; in other words, the average magnetization calculator 523 calculates average magnetization of the entire particle.

The determiner 524 calculates a Curie temperature by fitting a plot of average magnetization and temperature using the following Expression (1):
[Expression 1] $Average magnetization = {\left(1-\frac{T}{{T}_{C}}\right)}^{β}$ Expression (1) where T represents temperature, Tc represents Curie temperature, and β ≈ 0.34.

As illustrated in FIG. 5, the outputter 123 further includes a Curie temperature acquirer 531, a particle size acquirer 532, a temperature range calculator 533, and a graph generator 534.

When the Curie temperature calculator 122 completes the magnetic simulation processing, the Curie temperature acquirer 531 acquires a Curie temperature from the Curie temperature calculator 122 and stores the acquired Curie temperature in the data storage 535. The Curie temperature acquirer 531 acquires Curie temperatures of a plurality of magnetic calculation models 522 which differ in particle size as targets for magnetic simulation, and stores the acquired Curie temperatures in the data storage 535 as stored data.

The particle size acquirer 532 acquires a particle size of the magnetic calculation model 522, associates the acquired particle size with a Curie temperature, and stores the particle size in the data storage 535 as stored data. The particle size acquirer 532 sequentially acquires a particle size of each of the plurality of magnetic calculation models 522 which differ in particle size during the magnetic simulation processing. Each time a Curie temperature is acquired by the Curie temperature acquirer 531, the particle size acquirer 532 associates the acquired particle size with the acquired Curie temperature and stores the particle size in the data storage 535 as stored data.

The temperature range calculator 533 calculates the range of particle sizes based on the information indicating variation in particle sizes informed by the measurement device 110. Specifically, the temperature range calculator 533 calculates the range of particle sizes using a median value and a variance value included in the information indicating variation in particle sizes. The range of particle sizes calculated by the temperature range calculator 533 includes a median value, a median value minus 1/2 of a variance value, and a median value plus 1/2 of a variance value.

The temperature range calculator 533 calculates the range of Curie temperatures corresponding to the range of particle sizes based on a plurality of combinations of Curie temperatures and particle sizes stored in the data storage 535. The range of Curie temperatures calculated by the temperature range calculator 533 includes:
- a Curie temperature corresponding to a median value of particle sizes;
- a Curie temperature corresponding to a median value minus 1/2 of a variance value; and
- a Curie temperature corresponding to a median value plus 1/2 of a variance value.
The temperature range calculator 533 informs the graph generator 534 of the range of particle sizes and the range of Curie temperatures.

The graph generator 534 reads a plurality of combinations of Curie temperatures and particle sizes stored in the data storage 535 and generates a graph. The graph generator 534 superimposes the range of particle sizes and the range of Curie temperatures informed by the temperature range calculator 533 on the generated graph and outputs the graph.

### <Flow of Curie Temperature Range Calculation Processing>

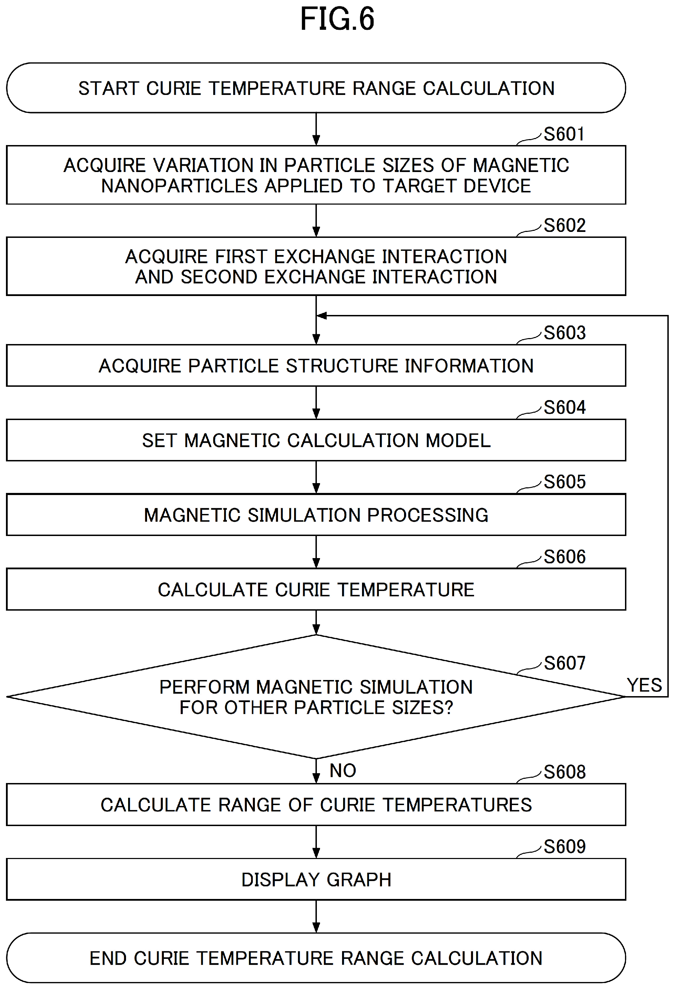

Next, a flow of the Curie temperature range calculation processing by the analysis system 100 will be described. FIG. 6 is a first flowchart showing a flow of the Curie temperature range calculation processing.

In step S601, the measurement device 110 samples and measures particle sizes of the FePt magnetic nanoparticles applied to the target device, and calculates information indicating variation in particle sizes. The information processing apparatus 120 acquires the calculated information indicating variation in particle sizes, and calculates a range of particle sizes.

In step S602, the information processing apparatus 120 receives inputs of a first exchange interaction and a second exchange interaction of the FePt magnetic nanoparticle from the user, thereby acquiring the first exchange interaction and the second exchange interaction of an FePt magnetic nanoparticle.

In step S603, the information processing apparatus 120 acquires, from the user, atomic arrangement information, particle size, particle shape, and the like as the particle structure information of the magnetic calculation model for a single FePt magnetic nanoparticle.

In step S604, the information processing apparatus 120 sets a magnetic calculation model for a single FePt magnetic nanoparticle that is specified based on setting information including the following:
- the first exchange interaction and the second exchange interaction acquired in step S602; and
- the particle structure information acquired in step S603.

In step S605, the information processing apparatus 120 performs magnetic simulation processing using the predefined magnetic calculation model, and calculates average magnetization at each temperature.

In step S606, the information processing apparatus 120 calculates a Curie temperature based on the calculated average magnetization.

In step S607, the information processing apparatus 120 determines whether the magnetic simulation processing is to be performed for other particle sizes. If it is determined in step S607 that the magnetic simulation processing is to be performed for other particle sizes (Yes in step S607), the process returns to step S603. In this case, in step S603, the information processing apparatus 120 acquires the particle structure information including other particle sizes, and sequentially predefines each of a plurality of magnetic calculation models which differ in particle size, thereby performing the processing in steps S604 through S607. Thus, the information processing apparatus 120 can sequentially calculate a Curie temperature corresponding to each particle size.

When it is determined in step S607 that the magnetic simulation processing is to be not performed for other particle sizes (No in step S607), the processing proceeds to step S608.

In step S608, the information processing apparatus 120 calculates the range of Curie temperatures corresponding to the range of particle sizes calculated in step S601.

In step S609, the information processing apparatus 120 repeats the processing in steps S603 through S607 to acquire a plurality of combinations of particle sizes and Curie temperatures generated by performing the magnetic simulation processing for particle sizes different from each other. The information processing apparatus 120 generates a graph based on the acquired plurality of combinations of particle sizes and Curie temperatures. The information processing apparatus 120 superimposes the range of particle sizes calculated in step S601 and the range of Curie temperatures calculated in step S608 on the generated graph and outputs the graph.

### <Specific Example of Stored Data>

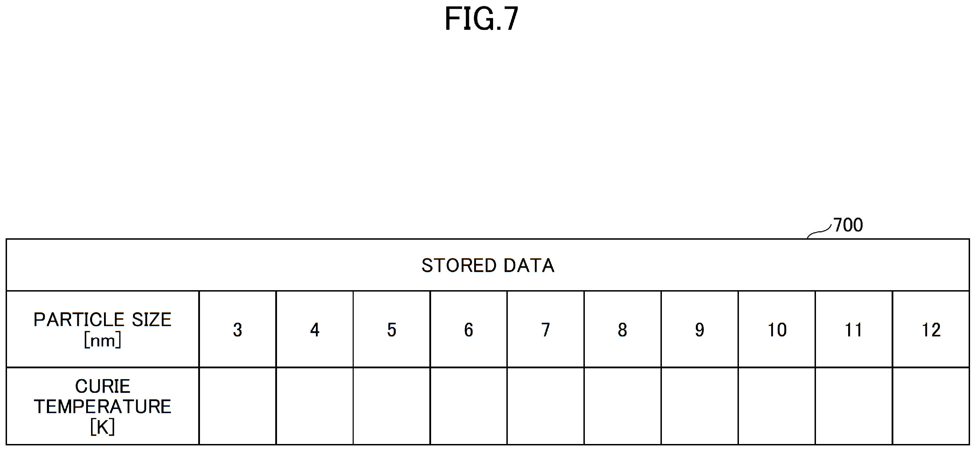

Next, a specific example of stored data stored in the data storage 535 will be described. FIG. 7 is a diagram illustrating an example of the stored data.

As illustrated in FIG. 7, the stored data 700 includes "particle size [nm]" and "Curie temperature [K]" as information items. Under the item "particle size [nm]", the particle sizes included in the particle structure information sequentially acquired by the particle structure information acquirer 511 are stored. Under the item "Curie temperature [K]", Curie temperatures that are sequentially calculated by the Curie temperature calculator 122 are associated with a corresponding particle size and stored.

### <Specific Example of Graph>

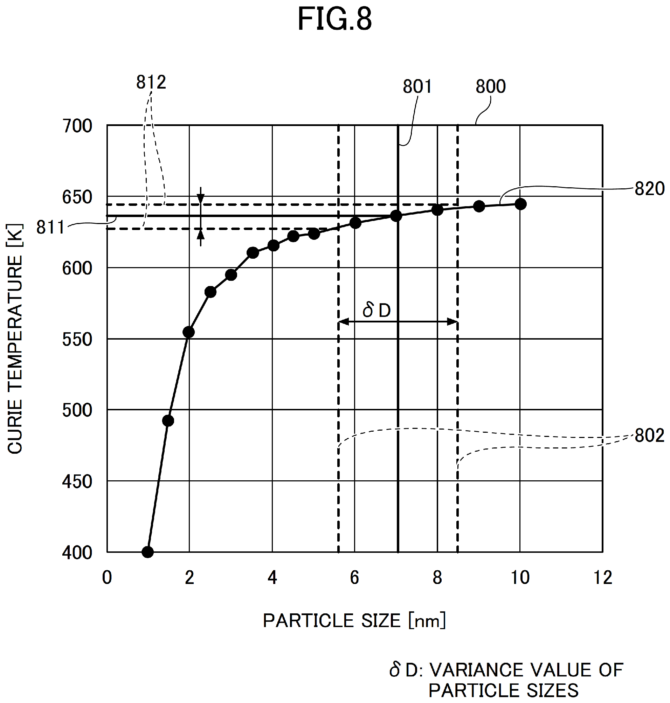

Next, a specific example of a graph generated by the graph generator 534 will be described. FIG. 8 is a graph illustrating a relationship between a particle size and a Curie temperature, with a range of particle sizes and a range of Curie temperatures being superimposed on the graph.

In the graph 800 illustrated in FIG. 8, the horizontal axis represents a particle size [nm], and the vertical axis represents a Curie temperature [K]. The line 801 in the graph 800 represents a median value of particle sizes of the FePt magnetic nanoparticles measured by the measurement device 110. The lines 802 in the graph 800 represent a particle size obtained by adding or subtracting 1/2 of a variance value δD of particle sizes of the FePt magnetic nanoparticles, which is measured by the measurement device 110, to or from the median value.

The line 811 in the graph 800 represents a Curie temperature at the intersection of the line 801 representing the median value of particle sizes and a curve 820 representing Curie temperature. The lines 812 in the graph 800 represent a Curie temperature at the intersection with the lines 802 representing the particle size obtained by adding 1/2 of a variance value δD of particle sizes to or subtracting the variance value δD from a median value and the curve 820 representing Curie temperature.

In other words, the range enclosed by the lines 802 represents the range of particle sizes, and the area enclosed by the lines 812 represents the range of Curie temperatures.

### <Explanation of Calculation Accuracy>

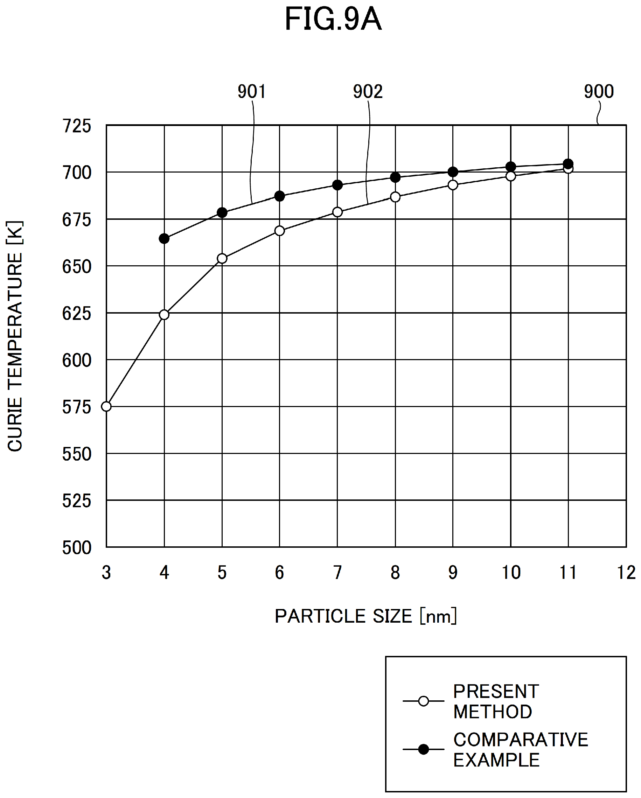

Next, differences in accuracy of the Curie temperature calculation resulting from variations in predefined magnetic calculation models will be explained. FIG. 9A is a first diagram illustrating differences in calculation accuracy resulting from variations in the magnetic calculation models. In the graph 900 illustrated in FIG. 9A, the horizontal axis represents a particle size [nm], and the vertical axis represents a Curie temperature [K].

The curves 901 and 902 in the graph 800 indicate examples wherein magnetic simulation was performed using the following models to calculate a Curie temperature at each particle size:
- a magnetic calculation model for a simple cubic lattice; and
- a magnetic calculation model in which a Curie temperature is 750 [K] when a particle size is 12 [nm]. As illustrated in the "3a" part of FIG. 3, the curve 901 indicates a case (comparative example) in which magnetic simulation was performed using a magnetic calculation model in which J is set as an exchange interaction acting between directly adjacent Fe atoms. As illustrated in the "3b" part of FIG. 3, the curve 902 indicates a case (the method of the present disclosure) in which magnetic simulation was performed using a magnetic calculation model in which J' is set as a first exchange interaction and J" is set as a second exchange interaction.

When comparing the line 901 and the line 902, the smaller the particle size, the greater the decrease in Curie temperature in the line 902, while the decrease in Curie temperature is smaller in the line 901. The experimental values of the Curie temperature at each particle size are close to those of the line 902 because the Curie temperature decreases more when the particle size decreases.

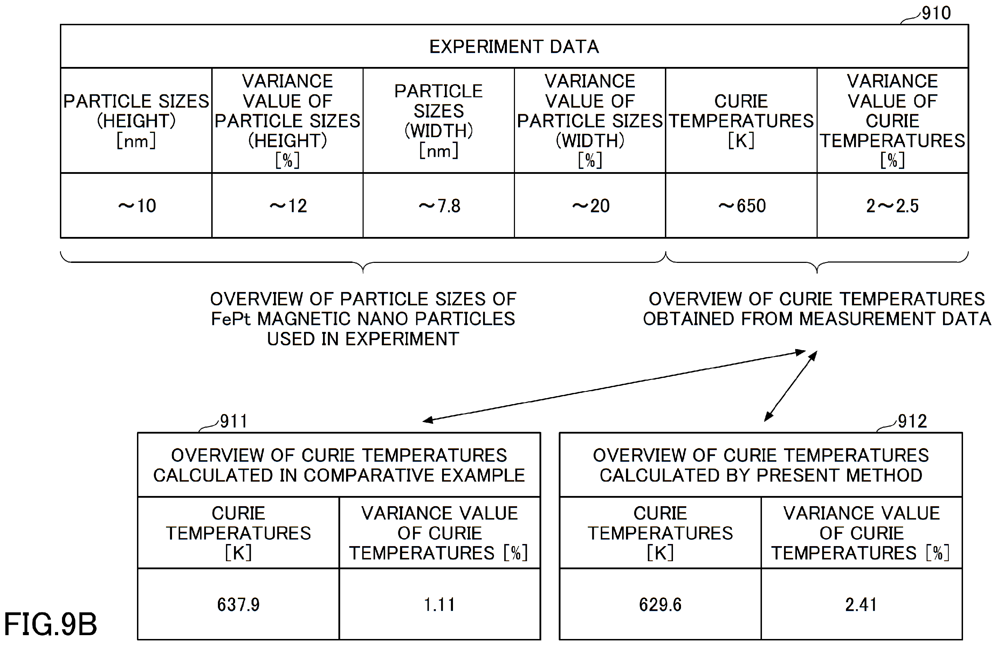

FIG. 9B is a second diagram illustrating a difference in calculation accuracy resulting from variations in magnetic calculation models and shows the following in comparison:
- a Curie temperature calculated from average magnetization measured when the FePt magnetic nanoparticles are actually heated; and
- a Curie temperature calculated from average magnetization calculated by magnetic simulation using the magnetic calculation model reproducing the actually heated FePt magnetic nanoparticles.

In FIG. 9B, the table 910 indicates an overview of particle sizes of FePt magnetic nanoparticles used in the experiment, which is obtained by analyzing the FePt magnetic nanoparticles used in the experiment using a TEM, and compiling the particle sizes in both planar and cross-sectional directions. "TEM" is an abbreviation for a transmission electron microscope.

The table 910 of FIG. 9B also indicates an overview of Curie temperatures obtained from measurement data, which indicates the Curie temperatures calculated from average magnetization measured when the FePt magnetic nanoparticles were actually heated and the variance value of the Curie temperatures.

The table 911 in FIG. 9B indicates an overview of Curie temperatures in the case (comparative example) in which magnetic simulation is performed using a magnetic calculation model in which J is set as an exchange interaction acting between directly adjacent Fe atoms.

The table 912 in FIG. 9B indicates an overview of Curie temperatures in the case (the method of the present disclosure) in which magnetic simulation was performed using a magnetic calculation model in which J' is set as a first exchange interaction and J" is set as a second exchange interaction.

When comparing the table 911 with the table 912, the variance value of Curie temperatures in the table 911 deviates from the values in the table 910, while the variance value of Curie temperatures in the table 912 is included in the values of the table 910.

Thus, if the case (1) in which a magnetic calculation model in which J' is set as a first exchange interaction and J" is set as a second exchange interaction is used is compared with the case (2) in which a magnetic calculation model in which J is set as an exchange interaction is used, it was verified from FIGS. 9A and 9B that a higher calculation accuracy can be obtained in the calculation of Curie temperatures in the case (1).

### <Summary>

As is clear from the above description, the information processing apparatus 120 according to the first embodiment is configured to:
- acquire particle structure information indicating the structure of an FePt magnetic nanoparticle, a first exchange interaction acting between Fe atoms contained in an FePt magnetic nanoparticle, and a second exchange interaction acting between Fe atoms with a Pt atom that is arranged therebetween;
- predefine a magnetic calculation model using the acquired particle structure information, first exchange interaction, and second exchange interaction;
- perform magnetic simulations using the predefined magnetic calculation model, and calculate a Curie temperature by calculating average magnetization at each temperature; and
- generate a graph representing a relationship between the particle size of the magnetic nanoparticle contained in the particle structure information and the calculated Curie temperature and output the graph.

Thus, by performing magnetic simulations by using the magnetic calculation model in which the first exchange interaction and the second exchange interaction are set, a Curie temperature can be calculated with high accuracy. In other words, according to the first embodiment, the calculation accuracy can be improved in the calculation of Curie temperature for each particle size.

### (Second Embodiment)

Although the calculation method of a first exchange interaction J' and a second exchange interaction J" is not mentioned in the first embodiment, a first exchange interaction and a second exchange interaction may be calculated by a first-principles calculation. Hereinafter, the second embodiment will be described focusing on differences from the first embodiment.

### <System Configuration of Analysis System>

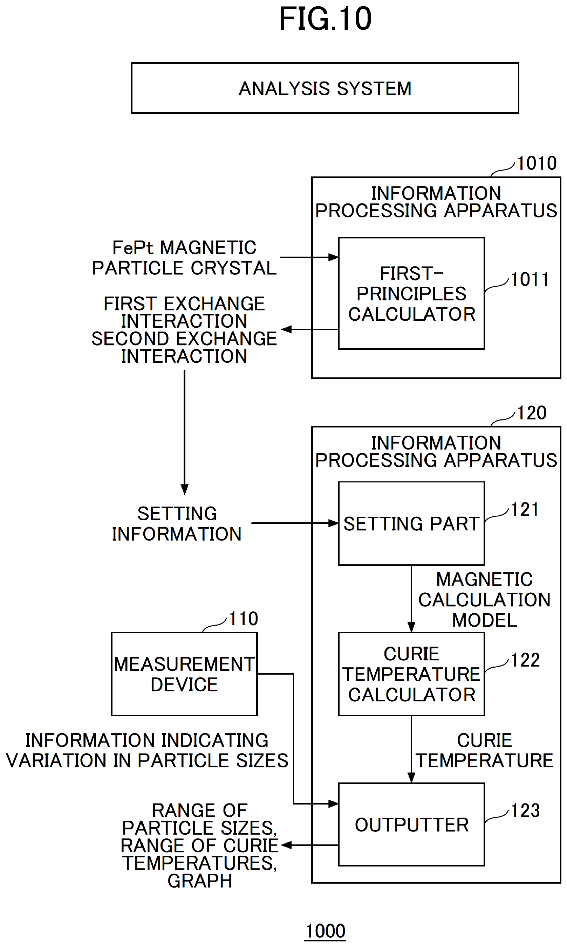

First, a system configuration of an analysis system including an information processing apparatus according to the second embodiment will be described. FIG. 10 is a second diagram illustrating an example of a system configuration of the analysis system. The difference from the system configuration described with reference to FIG. 1 in the first embodiment is that an analysis system 1000 includes an information processing apparatus 1010.

A first-principles calculation program is installed in the information processing apparatus 1010, and by executing the program, the information processing apparatus 1010 functions as a first-principles calculator 1011.

Information about the FePt magnetic particle crystal is input to the first-principles calculator 1011. Thus, the first-principles calculator 1011 can calculate a first exchange interaction and a second exchange interaction of an FePt magnetic nanoparticle by the first-principles calculation.

For example, the first-principles calculator 1011 can calculate J' = 9.54 × 10⁻²¹ [J/link] as a first exchange interaction and J" = 0.90 × 10⁻²¹ [J/link] as a second exchange interaction.

The first exchange interaction and the second exchange interaction calculated by the first-principles calculator 1011 are used as part of the setting information that is input to the information processing apparatus 120.

### <Flow of Curie Temperature Range Calculation Processing>

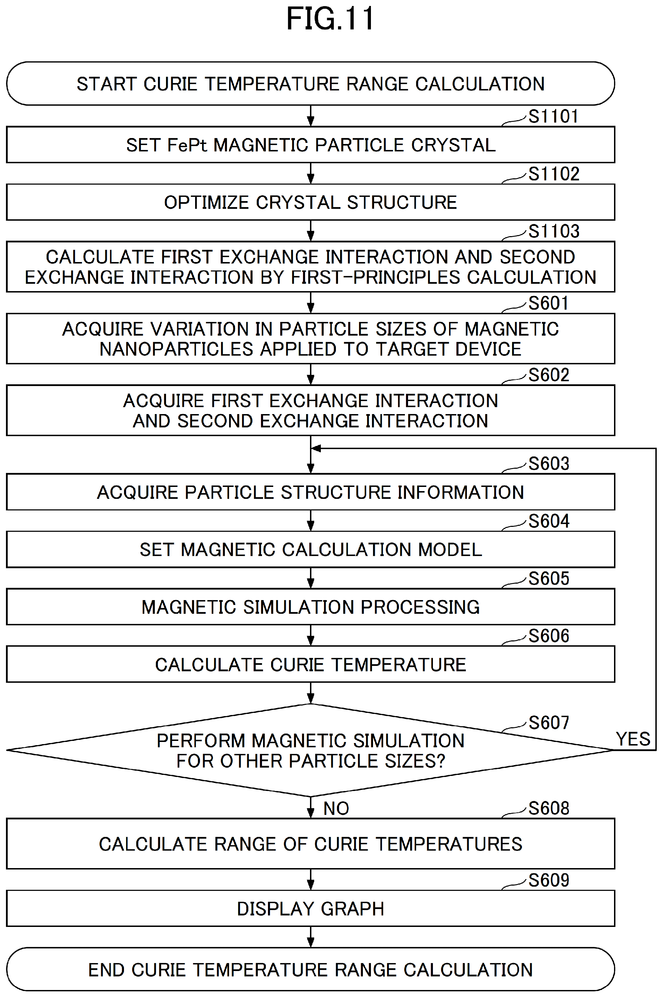

Next, a flow of the Curie temperature range calculation processing by the analysis system 1000 will be described. FIG. 11 is a second flowchart showing a flow of the Curie temperature range calculation processing. FIG. 11 differs from FIG. 5 in that it includes steps S1101 through S1103, which are not depicted in FIG. 5.

In step S1101, the information processing apparatus 1010 receives input of information about a FePt magnetic particle crystal.

In step S1102, the information processing apparatus 1010 optimizes the crystal structure by first-principles calculation.

In step S1103, the information processing apparatus 1010 calculates a first exchange interaction and a second exchange interaction of an FePt magnetic nanoparticle by the first-principles calculation.

### <Summary>

As is clear from the above description, the information processing apparatus 120 according to the second embodiment is configured to:
- have a function similar to that of the information processing apparatus 120 according to the first embodiment; and
- acquire a first exchange interaction and a second exchange interaction calculated by the first-principles calculation, using the information processing apparatus 1010.

Thus, with the information processing apparatus 120 according to the second embodiment, it is possible to further improve accuracy in the calculation of a Curie temperature for each particle size.

### (Other Embodiments)

In each of the foregoing embodiments, the Curie temperature calculator 122 is configured to calculate Curie temperature every time the user changes a particle size. However, the method of setting a particle size is not limited to this, and, for example, a plurality of particle sizes may be collectively set as a particle size of a magnetic calculation model to be subjected to magnetic simulation. In this case, the Curie temperature calculator 122 may be configured to sequentially calculate Curie temperatures for the plurality of set particle sizes.

The setting part 121 may be configured to accept an input of each of a plurality of particle sizes, or may be configured to accept an input of a maximum value, a minimum value, and a step size of a plurality of particle sizes. The maximum value and the minimum value of a particle size in this case may be determined, for example, based on a range of particle sizes.

In the foregoing embodiments, the information processing apparatus 120 has been described as outputting a range of Curie temperatures for the purpose of quantitatively indicating the recording quality of the recording layer 143. However, a method of using a range of Curie temperatures that is output by the information processing apparatus 120 is not limited to this.

For example, it may be used to search for an optimum particle shape of a FePt magnetic nanoparticle by changing a particle shape included in the setting information and calculating a range of Curie temperatures for each particle shape. The particle shape used herein includes, for example, a square prism, a cylinder, a hexagonal prism, and the like.

Alternatively, it may be used to search for an optimum magnetic nanoparticle by inputting setting information for specifying a magnetic nanoparticle other than an FePt magnetic nanoparticle and calculating a range of the Curie temperature of each kind of magnetic nanoparticle.

In the second embodiment, the information processing apparatus 1010 and the information processing apparatus 120 are constituted separately, but the information processing apparatus 1010 and the information processing apparatus 120 may be constituted integrally.

The present disclosure is not limited to the structures described in the foregoing embodiments, such as a combination with other elements. These points may be changed within a range not departing from the spirit of the present disclosure, and may be appropriately defined in accordance with the application mode.

This application claims priority from Japanese Patent Application No. 2023-200999, filed on November 28, 2023, and is incorporated herein by reference in its entirety.

### REFERENCE SIGNS LIST

- 100: Analysis system
- 110: Measurement device
- 120: Information processing apparatus
- 121: Setting part
- 122: Curie temperature calculator
- 123: Outputter
- 511: Particle structure information acquirer
- 512: Exchange interaction information acquirer
- 513: Magnetic calculation model setting part
- 521: Temperature controller
- 522: Magnetic calculation model
- 523: Average magnetization calculator
- 531: Curie temperature acquirer
- 532: Particle size acquirer
- 533: Temperature range calculator
- 534: Graphing generator
- 800: Graph
- 1010: Information processing apparatus
- 1011: First-principles calculator

## Claims

1. An information processing apparatus, comprising:
a setting part configured to predefine a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind;
a calculator configured to calculate a Curie temperature by calculating magnetization at each temperature using the predefined magnetic calculation model; and
an outputter configured to output the calculated Curie temperature by associating the calculated Curie temperature with a particle size of the magnetic nanoparticle included in the particle structure information.

2. The information processing apparatus according to claim 1, wherein
the particle structure information further includes atomic arrangement information indicating an arrangement of atoms included in the magnetic nanoparticle.

3. The information processing apparatus according to claim 2, wherein
the setting part is further configured to
acquire, as the first exchange interaction, an exchange interaction acting between directly adjacent atoms on a same plane among atoms arranged based on the atomic arrangement information; and
acquire, as the second exchange interaction, an exchange interaction acting between atoms of a same kind on a plane orthogonal to the same plane among the atoms arranged based on the atomic arrangement information.

4. The information processing apparatus according to claim 1, wherein
in a case where the setting part sequentially predefines each of a plurality of magnetic calculation models which differ in particle size of the magnetic nanoparticle and the setting part sequentially sets a Curie temperature, the outputter calculates a range of Curie temperatures corresponding to a predetermined range of particle sizes, each of the plurality of magnetic calculation models being the magnetic calculation model.

5. The information processing apparatus according to claim 4, wherein
the outputter outputs a graph showing a relationship between a plurality of particle sizes of the magnetic nanoparticle and a plurality of calculated Curie temperatures.

6. The information processing apparatus according to claim 5, wherein
the outputter superimposes the range of particle sizes and the range of Curie temperatures on the graph and outputs the graph.

7. The information processing apparatus according to claim 4, wherein
the range of particle sizes is specified based on a median value of the plurality of particle sizes and a variance value of the plurality of particle sizes.

8. The information processing apparatus according to any one of claims 1 to 7, wherein
the magnetic nanoparticle is an FePt magnetic nanoparticle.

9. The information processing apparatus according to claim 8, wherein
the first exchange interaction is an exchange interaction acting between Fe atoms, and the second exchange interaction is an exchange interaction acting between Fe atoms with a Pt atom being arranged between the Fe atoms.

10. The information processing apparatus according to any one of claims 1 to 9, wherein
the first exchange interaction and the second exchange interaction are calculated by a first-principles calculation.

11. An analysis method in which a computer is caused to perform:
predefining a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind;
calculating a Curie temperature by calculating magnetization at each temperature using the predefined magnetic calculation model; and
outputting the calculated Curie temperature by associating the calculated Curie temperature with a particle size of the magnetic nanoparticle included in the particle structure information.

12. An analysis program for causing a computer to perform:
predefining a magnetic calculation model by acquiring particle structure information indicating a structure of a magnetic nanoparticle, a first exchange interaction acting between directly adjacent atoms of a first kind in the magnetic nanoparticle, and a second exchange interaction acting between directly adjacent atoms of the first kind in the magnetic nanoparticle with an atom of a second kind being arranged between the directly adjacent atoms, the second kind differing from the first kind;
calculating a Curie temperature by calculating magnetization at each temperature using the predefined magnetic calculation model; and
outputting the calculated Curie temperature by associating the calculated Curie temperature with a particle size of the magnetic nanoparticle included in the particle structure information.
